# EUROPEAN PATENT SPECIFICATION

(11) **EP 2 288 509 B1**
(45) Date of publication and mention of the grant of the patent: **14.03.2018**
(21) Application number: 08768727.3
(22) Date of filing: 23.06.2008
(51) Int. Cl.: B60W 30/18, B60W 10/11, B60W 10/06, B60W 10/08, F16H 61/21

(54) **REDUCTION OF POWER LOSSES FOR VEHICLE DRIVE TRAINS WITH RECUPERATION DEVICES**
VERRINGERUNG VON ENERGIEVERLUSTEN FÜR FAHRZEUGANTRIEBSSTRÄNGE MIT RÜCKGEWINNUNGSVORRICHTUNGEN
RÉDUCTION DE PERTES DE PUISSANCE POUR CHAÎNES DYNAMIQUES DE VÉHICULE AVEC DISPOSITIFS DE RÉCUPÉRATION

(43) Date of publication of application: 02.03.2011
(73) Proprietor: Bayerische Motoren Werke Aktiengesellschaft, 80809 München (DE)
(72) Inventor: LEINHOS, Dirk, Christian, 82194 Gröbenzell (DE)
(86) International application number: PCT/US2008/007803
(87) International publication number: WO 2009/157891

(56) References cited:
- US-A- 5 287 772
- US-A- 5 720 690
- US-A- 5 758 302
- US-A- 5 823 280
- US-A1- 2002 177 504
- US-A1- 2005 145 426
- US-A1- 2006 237 247
- US-A1- 2007 088 465

## Description

The present invention is directed to a method of operating a vehicle having a recuperation device. US 2002/0177504 A1 discloses a hybrid drive wherein, during deceleration of the motor vehicle, the transmission of the power train is shifted from a lower gear into a higher gear. When the vehicle undergoes a deceleration, the transmission is shifted into a gear such that the RPM at the mechanical and/or electrical recuperating arrangement is set to ensure maximum energy output. This can mean that, if electrical recuperation is desired, the transmission ratio is selected to provide for the rotor an RPM which matches or at least closely approximates the RPM at optimum efficiency and/or at maximum output (performance) of the electrical machine.
Accordingly, it is an object of the present invention to reduce losses that reduce the amount of energy that can be recuperated by recuperation devices.
This problem is solved by a method according to claim 1.

Hybrid vehicles use electric motors alimented by one or more batteries to supplement or replace the propulsion provided by a non-electric motor, such as an internal combustion (IC) engine. In purely electric drive mode ("e-drive"), the vehicle's propulsion is assured by the electric motors, which consume electrical power stored in the batteries. Advantages of the purely electric drive mode include the reduction of vehicle emissions, and depending on the operational circumstances, a more energy efficient operation of the vehicle.

When operating in hybrid mode, propulsion of the vehicle is assured by both the electric motors and the non-electric motor, for example the IC engine. By using a specifically designed hybrid transmission, the IC engine and the one or more electric motors are selectively coupled to the drive wheels, so that the IC engine alone, or together with the electric motor or motors propels the vehicle. Operating the IC engine allows the ability to recharge the batteries, and to provide more power and torque available to the driver.

Recuperation systems may be utilized in hybrid or other types of vehicles, including conventional vehicles powered by internal combustion engines, to capture the vehicle's kinetic energy which would otherwise be dissipated as heat by the brakes when the vehicle is slowed. These systems may include, for example, a generator connected to the drive of the vehicle which produces electric power from the vehicle's kinetic energy as it slows the vehicle. In other cases, the generator may be connected to the crankshaft of the engine, or may be a part of the hybrid drive. Hybrid vehicles are well suited for energy recuperation, because their electric motors can be used as generators driven by the wheels.

The electric power recuperated by the exemplary device may be used immediately or may be stored in batteries, capacitors or other devices for storing electrical energy. In addition to electrical systems, different recuperation arrangements may also be used, such as mechanical and hydraulic systems. In those cases, the energy recuperated may be stored, for example, in flywheels, in pressure accumulators, and in other devices. Vehicles that are not equipped with a recuperation device may also benefit from embodiments of the invention, because reducing the engine speed, according to the invention, may allow the vehicle to coast longer before the application of engine power becomes necessary.

Modern transmissions, such as those used in conjunction with internal combustion engines, are programmed to select the transmission or gear ratio by taking into account multiple parameters. For example, the accelerator position and the rotational speeds of the wheels and of the IC engine may be taken into consideration in determining the appropriate gear ratio to be selected. In the case of hybrid transmissions, additional variables may be taken in consideration. For example, the battery charging condition and the loading of the electric components of the vehicle may also be taken into account.

In some cases, certain limits may be used to constrain which gear ratios are permissible under various conditions. Certain rotational speeds, in particular, can be of significance. For example, the rotational speed of the internal combustion engine may be used to set a limit or set-point corresponding to the highest possible gear ratio that can be selected. This is to prevent a too high rotational speed of the IC engine when it is driven by the wheels, and particularly to prevent exceeding the redline speed of the engine, i.e. the maximum permissible mechanical speed of the engine.

On the other hand, demands such as a minimum engine power that may be required, or a tractive power reserve that is provided at a given operating point, may be used to select the lowest possible gear ratio selectable by the transmission. In this exemplary case, the selection logic prevents the IC engine from being slowed too much, since the power that can be generated by the IC engine is a function of the engine speed. If the rotational speed (RPM) of the IC engine is lowered excessively, it becomes difficult to provide a rapid increase in power if the driver requests it. Other vehicle processes may also require the engine to operate at a higher speed, and thus higher power level.

The same exemplary method can also be used when the vehicle is coasting, and when the brakes of the vehicle are applied. During coasting or braking, a gear of the transmission may be selected that meets the demands of the tractive power reserve or other minimum desired power level, and also prevents the engine from exceeding its RPM limits. For example, the system may set the lowest selectable gear ratio set-point to correspond to the minimum engine RPM compatible with providing the desired tractive power reserve. The system may also set the highest selectable gear ratio set-point to correspond to the maximum engine RPM compatible with safe operation of the engine. In this manner, the transmission gear ratio remains in a range that does not interfere with operating conditions of various vehicle components.

In the case of hybrid vehicles with an IC engine and an electric drive, the transmission is also adapted to transmit power to the wheels when the IC engine is switched off. For example, when the IC engine is off, it may be disconnected from the drive train, and its rotational speed can then be set to zero. According to the invention, the engine may be functionally disconnected, for example using a gears arrangement, and not necessarily physically disconnected, as when using clutches. In certain applications, the IC engine may be switched off when the vehicle moves below a certain speed, referred to as the pure electric drive speed. Above this speed, the restrictions to the range of allowed gear ratios or engine speeds apply, as described above.

In hybrid or other vehicles utilizing a kinetic energy recuperation system, the possible recuperation power is limited by the gear changing logic of the transmission. Engine drag is generally dependent on the rotational speed of the IC engine, when the engine is coasting without the injection of fuel and thus without generating power. The faster the engine is made to rotate, the greater the drag, due to internal friction of the engine and its associated components. This is also true when the engine is mated to a hybrid transmission and the vehicle operates in a speed range above the pure electric drive speed. Drag due to the spinning engine reduces the energy that can be recuperated when the vehicle is slowed down by operating a recuperation device as a generator. For example, below the highest allowed pure electric speed, the IC engine is functionally disconnected from the drive train and has zero rotation so it causes no drag. Above that speed, the IC engine is connected to the drive train, and causes drag during coasting.

Conventional hybrid transmissions are programmed to maintain the gear ratio during coasting in a range that allows maintaining a tractive power reserve or to meet other power demands, as described above. This requires the IC engine, which is connected to the drive train, to rotate rapidly, thereby generating a large amount of drag which reduces the amount of energy that can potentially be recuperated. The maximum energy that can be used or stored by the recuperation system is thus limited by the drag of the relatively high rotational engine speed required to meet other operational demands.

The exemplary embodiments of the present invention provide a method to maximize the amount of energy that can be recovered by a recuperation device used in a hybrid or other type of vehicle, in particular when the vehicle is operated in the coasting mode. Examples of recuperation devices include regenerative braking systems adapted to capture and store the vehicle's kinetic energy when slowing down, instead of dissipating it as braking heat. For example, the electric drive motor or motors present in the hybrid transmission of the vehicle may be used as electric generators that are rotated by the moving vehicle, and that slow the vehicle as they produce electricity. In one embodiment, the electric drive motor(s) may be integral with the transmission. The increase in recuperation energy results from reducing the speed of the IC engine during coasting or braking, when certain conditions are present, so that drag due to the IC engine is reduced. The lower non-electric engine rotational speed may be selected to optimize the power captured by the recuperation device when the vehicle slows down.

According to an exemplary embodiment of the invention, in the coasting mode, the system waives or modifies the requirement to make available a sufficient tractive power reserve. When this requirement is no longer imposed, or at least is reduced, the transmission can be set to a gear ratio that is as low as possible, resulting in a lower engine rotational speed than in the conventional setting used when the vehicle is not coasting. According to an embodiment of the invention, it is assumed that in the coasting mode, triggered for example by the accelerator being released and/or by the brake being applied, the driver will not request an instantaneous increase in driving torque, and the modified set-points for the lowers permissible gear ratio can be used without impacting performance.

According to other embodiments of the invention, different mechanisms may be selected to determine whether the vehicle is in the coasting mode, and the modified transmission set-points should be used. These may change depending on whether the vehicle is operated by the driver or by an automated system, such as an advanced cruise control. In the former case, the method according to the invention may attempt to determine when the driver will not require an immediate acceleration of the vehicle. This can be done, for example, by assuming that an immediate acceleration will not be requested when the brakes are applied, in addition to the accelerator not being applied. Alternatively, the coasting mode's modified set-point may be implemented simply when the accelerator is not applied, regardless of brake application, or following a slight pressing of the brake pedal without brake application. In some embodiments, the driver may be give a choice of when the lowered minimum gear ratio set-point is used, essentially choosing between better fuel economy when the lower gear ratio is selected, or more prompt availability of power, by manipulating a selector device.

When a continuously variable transmission (CVT) is used, the exemplary method may provide a continuous adjustment into a ratio resulting in a minimum engine speed. When a transmission with discrete gear ratios is used, a gear may be selected that would otherwise not be allowed, because of existing demands related to the tractive power reserve or other power demands that are normally imposed during operation of the vehicle.

In addition to providing the tractive power reserve, the higher gear ratio set-point, and thus higher minimum engine RPM, may be beneficial in providing sufficient power to operate various vehicle systems, such as environmental controls, and maintaining the battery charged. In addition, acoustic or emission considerations may require the higher minimum engine RPM.

As a result of the exemplary method of the invention, the rotational speed of the IC engine is lower in the coasting mode, for example when the brake is used and/or when the accelerator is not pressed, compared to conventional set-points. Any disadvantage resulting from the IC engine rotating too slowly can be corrected by rapidly accelerating the engine, if and when needed. For example, when an hybrid transmission is used that incorporates one or more electric drive motor /generators (generally referred to as the e-motors), the rotational speed of the IC engine can be raised very rapidly using the e-motors. In different embodiments, the e-motors may be located outside the transmission, such as hub mounted motors, or other configurations. The transmission output torque is thus not impaired in this mode by waiving the RPM limits associated with the desired power reserve, because when the coasting mode is ended, the IC engine's rotational speed can be rapidly raised by the e-motors to the conventional minimum speed.

The method according to the invention can also be used in vehicles using conventional transmissions to save energy while coasting. For example, the lower gear ratio set-point may be applied to reduce engine drag during coasting. When additional power is requested, a brief firing of the IC engine may be used to accelerate the engine to the synchronous rotational speed, for example when the brake is released. The engine acceleration may be avoided if a brief lowering of the transmission output torque can be tolerated when raising the rotational speed, which is analogous to a downshifting of the transmission.

According to one exemplary embodiment of the invention, the reduction in rotational speed of the IC engine can be achieved because, when the driver presses the brake pedal or otherwise applies the vehicle's brakes, a finite amount of time is needed by the driver to express a desire to accelerate the vehicle. For example, the driver may leave the brake pedal and change to the accelerator pedal to cause the vehicle to accelerate. The time it takes the driver to switch from the brake to the accelerator pedal is generally sufficient to raise the rotational speed of the IC engine to the level of the normal coasting operation. The engine and transmission combination is then ready to provide the required tractive power reserve when the driver requests it.

In some situations, it may be beneficial to maintain the higher IC engine rotational speed during coasting and when the brake pedal is applied, rather than lowering the engine speed as described above. For example, limits on some operating variables may block the system from reducing the engine speed. Brake temperature may be one such variable, requiring the higher engine RPM and thus additional energy absorption and slowing of the vehicle by the engine when the brakes are too hot. Other cases when the reduced IC engine RPM may be avoided include high deceleration conditions, situations like extended driving downhill, and situations such as when the devices tasked with storing the recuperation energy are unavailable or reach capacity.

The exemplary embodiments of the present invention provide a method in which the rotational speed of the IC engine in a vehicle is reduced when the engine is in a drag producing condition, such as coasting. The power that is taken up by engine drag is thus reduced, leaving a larger amount of power available to be recuperated by appropriate devices. The additional energy that is stored can be later used to propel the vehicle or to power accessories, and does not have to be provided in another manner, such as by driving a generating device with the IC engine. As a result of the reduced need to generate power, the vehicle operates more efficiently and with less fuel consumption.

In addition to causing the vehicle to be more efficient, the present invention confers other advantages. The mass flow rate of the exhaust gases is lower according to the invention, because the IC engine rotational speed is reduced. The reduced flow of exhaust gases cools less rapidly the components of the exhaust system, such as catalysts, that have to remain at a specified temperature to operate optimally, so that there is less need to turn the engine on to maintain the exhaust system temperature. According to the invention, it is possible to limit the cooling of various exhaust system components to a desired level. Other benefits also ensue from the present invention, such as reducing the need to purge the catalytic converters by turning on the engine, because there is less oxygen soaking of the converters when the vehicle is coasting. It is thus possible to activate the coasting switch-off at a lower component temperature, or to maintain it for a longer period.

Those of skill in the art will understand that different types of non-electric engines may be used according to the embodiments of the invention.

Although the present examples refer to IC engines mated to a hybrid transmission having electric motor/generators, other configurations may be used in the context of the invention. Different non-electric engines may include turbines, Sterling engines, etc. The engines may be mated to different recuperation devices, which include any system that converts the kinetic energy of the decelerating vehicle, such as regenerative braking systems, hybrid transmissions, electrical, mechanical hydraulic or other systems. It will be understood that the energy may be stored electrically, mechanically, hydraulically, chemically or in any other suitable manner. For example, capacitors, batteries, flywheels, pressure accumulators or other devices may be used for that purpose.

Other objects, advantages and novel features of the present invention will become apparent from the following detailed description of the invention when considered in conjunction with the accompanying drawing.

### BRIEF DESCRIPTION OF THE DRAWING

The present invention is described in the following with reference to the drawing below.

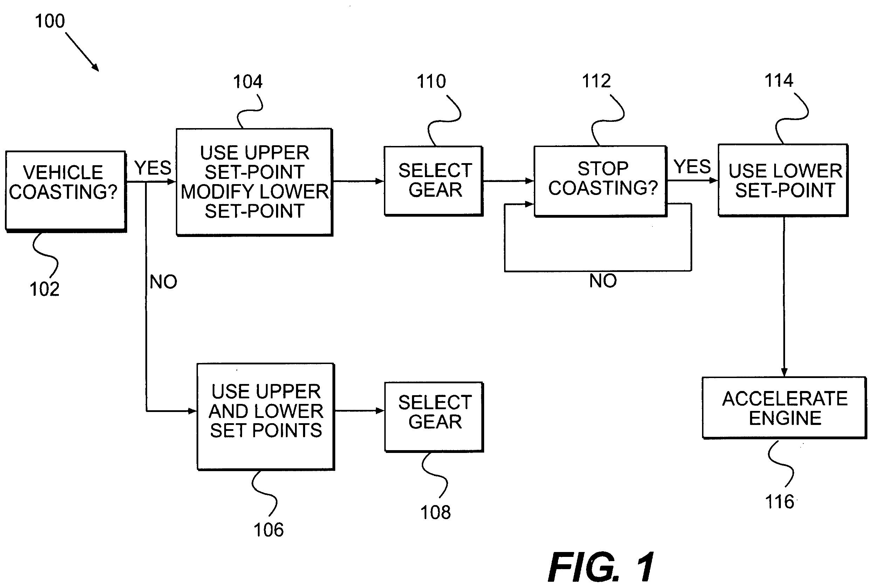

Fig. 1 shows a block diagram depicting the method according to an embodiment of the present invention.

### DETAILED DESCRIPTION OF THE DRAWING

The exemplary embodiments of the invention provide a method that determines the limits placed on shifting the gear ratios in a transmission of a vehicle, for example a vehicle with a hybrid transmission, particularly in the vehicle's coasting mode. In one exemplary embodiment, the method eases or removes the requirement of maintaining a minimum IC engine rotational speed when the vehicle is in the coasting mode. As described above, in one exemplary embodiment the coasting mode may be initiated when the driver releases the accelerator and/or applies the brake. A minimum rotational speed is generally specified to provide a tractive power reserve, which is useful if the driver wants to rapidly accelerate. However, to reduce engine drag and increase the amount of power that can be harnessed by a recuperation device, it is beneficial to further reduce the rotational speed of the coasting IC engine below that limit.

As described above, the method according to the present invention may utilize the modified gear ratio set-points in response to signals other than the release of the accelerator coupled to the application of the brake. Those of skill in the art will also understand that providing a tractive power reserve is not the only factor in determining the normal minimum engine speed, as also described above.

When the exemplary method determines that the driver wants to accelerate, for example by recognizing that the brake pedal is no longer being pressed or some other indication exists, the IC engine rotational speed is rapidly increased to a level sufficient to provide the tractive power reserve. For example, electric motors built into the transmission may be used to increase the RPM, or additional fuel may be provided to accelerate the IC engine.

Figure 1 shows a diagram of an exemplary method 100 according to an embodiment of the invention, that controls the shifting of the transmission during and after the coasting mode of the vehicle. In block 102, the system determines whether the accelerator and the brake are used. If the accelerator is being used, the vehicle's transmission is shifted normally. In this example, if neither the accelerator nor the brake is used, the transmission may be set to follow the normal shifting mode, in which upper and lower engine RPM limits determine the allowable gear ratios. As shown in block 106, the highest gear ratio is limited by the maximum allowable engine RPM (redline). The lowest gear ratio is limited by the lowest engine RPM that can provide the desired tractive power reserve, or other desired engine capability. The appropriate gear ratio is then selected in block 108, within these boundaries. Those of skill in the art will understand that different indicators may be used to decide whether the vehicle is to use the coasting mode.

If the accelerator is not used and the brake is being applied by the driver, the coasting mode is initiated, and the exemplary limitations on the allowable gear ratios are determined in block 104. In this exemplary embodiment, the engine redline still limits the maximum gear ratio that can be used, however, the minimum usable gear ratio is no longer limited by the requirement of maintaining a minimum engine RPM. Instead, this limitation is waived, and the gear ratio can be selected to obtain an even lower engine RPM. The corresponding gear ratio is selected in block 110, permitting a lower gear ratio set-point that results in less engine drag and less wasted energy.

Because it is necessary to provide the tractive power reserve when it is needed, the method monitors the driver's use of the brake pedal in block 112. As long as the brake pedal is depressed ("NO brake release" in the diagram), in this exemplary case no changes are made to the gear ratios. If the brake is released ("YES brake release"), the exemplary method in block 114 determines the lowest gear ratio which is required to obtain the desired minimum engine RPM, and sets it as a set-point to shifting the transmission. In different embodiments, other indications that the coasting mode should be entered can be used by the method.

Once the brake is no longer applied, thus indicating an end to the coasting mode, the IC engine is accelerated in block 116, to match the minimum speed associated with the new gear ratio set-point, and to be ready to provide the desired tractive power reserve should the driver require it. In one example, the electric motors in the hybrid transmission can be used to accelerate the engine. In another example, the kinetic energy of the vehicle may be used, such as by engaging the engine to the wheels. Alternatively, extra fuel may be injected in the engine or other measures may be taken to accelerate the IC engine speed to the required minimum speed.

The process of setting the new gear ratio limit and accelerating the IC engine to the appropriate speed is done very rapidly, according to the invention. For example, the drive train may be adapted to provide the desired tractive power reserve in the time period that is necessary for the driver to release the brake and activate the accelerator. In a different embodiment, the method according to the invention may suspend the minimum engine speed requirement when the vehicle is determined to be coasting, even without brake application. In this case, the method may monitor usage of the accelerator to determine when to provide the tractive power reserve by accelerating the engine.

It will be understood by those skilled in the art that various details of the exemplary embodiment may be varied while remaining within the scope of the invention. For example, although the present embodiments describe the use of brake and accelerator pedals by a driver, different mechanisms to indicate the coasting mode activation and acceleration requests may be used. These could include other foot or hand operated commands, voice commands, or other driver issued commands. In different embodiments, commands issued directly by the driver may not be necessary, as in the case of automatic driving systems, where an electronic processor commands at least some modes of operation and actions by the vehicle. In the latter case, the cruise control may directly command the use of the vehicle's coasting mode.

It will also be understood by those skilled in the art that the exact sequence of some steps described in the exemplary embodiments may be modified depending on operational considerations specific to the vehicle using the systems according to the invention. Some steps can be taken concurrently with others, and the order of some steps may be changed. For example, when the brake is released after coasting, computing a minimum engine RPM and beginning to accelerate the engine may be carried out concurrently.

## Claims

1. A method of operating a vehicle having a non-electric engine selectively coupled to a transmission and a recuperation device selectively coupled to the transmission, comprising the acts of:
• determining lowest and highest gear ratio set-points of the transmission based at least in part on lowest and highest non-electric engine rotational speed limitations, respectively;
• determining if the vehicle is in a coasting mode;
• while the vehicle is in a coasting mode, modifying the lowest gear ratio set-point (104) to slow the non-electric engine below the lowest non-electric engine rotational speed limitation;
• recuperating kinetic energy while slowing the vehicle, using a recuperation device;
• determining a termination of the coasting mode of the vehicle (112); and
• restoring the lowest gear ratio set-point (114) and accelerating the non-electric engine (116) to at least the lowest non-electric engine rotational speed limitation.

2. The method according to claim 1, further comprising determining the lowest gear ratio set-point based on a desired tractive power reserve.

3. The method according to claim 1 or 2, further comprising determining the highest gear ratio set-point based on a maximum mechanical engine speed.

4. The method according to one of the claims 1 to 3, further comprising accelerating the non-electric engine to a speed commensurate with producing a desired power level.

5. The method according to one of the claims 1 to 4, further comprising determining if the vehicle is in the coasting mode by monitoring at least one of accelerator and brake actuation.

6. The method according to one of the claims 1 to 5, further comprising determining the vehicle is in coasting mode when the accelerator is released.

7. The method according to one of the claims 1 to 5, further comprising determining the vehicle enters coasting mode when the brake is applied and the accelerator is released.

8. The method according to one of the claims 1 to 7, further comprising determining termination of the coasting mode by monitoring at least one of brake and accelerator actuation.

9. The method according to one of the claims 1 to 8, further comprising, after termination of the coasting mode, accelerating the non-electric engine with an electric motor of the vehicle.

10. The method according to one of the claims 1 to 9, further comprising, after termination of the coasting mode, accelerating the non-electric engine by increasing a fuel supply thereto.

11. The method according to one of the claims 1 to 10, further comprising, after termination of the coasting mode, accelerating the non-electric engine with kinetic energy of the vehicle.

12. The method according to one of the claims 1 to 11, wherein the recuperation device stores energy in at least one of a battery, a capacitor, an accumulator, a pressure tank and a flywheel.

13. The method according to one of the claims 1 to 12 further comprising modifying the lowest gear ratio set-point to reduce the non-electric engine rotational speed below a speed sufficient to provide a desired power level.

14. The method according to one of the claims 1 to 13, further comprising utilizing an electric hybrid drive motor of the vehicle as a generator to convert kinetic energy into electric energy.

## Patentansprüche

1. Verfahren zum Betreiben eines Fahrzeugs mit einem selektiv mit einem Getriebe gekoppelten nichtelektrischen Motor und einer selektiv mit dem Getriebe gekoppelten Rückgewinnungsvorrichtung, das die folgenden Vorgänge umfasst:
- Bestimmen des niedrigsten und höchsten Gangübersetzungseinstellwerts des Getriebes zumindest teilweise basierend auf der niedrigsten bzw. höchsten Drehzahlbegrenzung des nichtelektrischen Motors;
- Bestimmen, ob sich das Fahrzeug in einem Schubbetriebsmodus befindet;
- während sich das Fahrzeug in einem Schubbetriebsmodus befindet, Modifizieren des niedrigsten Gangübersetzungseinstellwerts (104) zum Verlangsamen des nichtelektrischen Motors unter die niedrigste Drehzahlbegrenzung des nichtelektrischen Motors;
- Zurückgewinnen von kinetischer Energie beim Verlangsamen des Fahrzeugs unter Verwendung einer Rückgewinnungsvorrichtung;
- Bestimmen einer Beendigung des Schubbetriebsmodus des Fahrzeugs (112) und
- Wiederherstellen des niedrigsten Gangübersetzungseinstellwerts (114) und Beschleunigen des nichtelektrischen Motors (116) auf mindestens die niedrigste Drehzahlbegrenzung des nichtelektrischen Motors.

2. Verfahren nach Anspruch 1, ferner umfassend Bestimmen des niedrigsten Gangübersetzungseinstellwerts basierend auf einer Soll-Antriebsleistungsreserve.

3. Verfahren nach Anspruch 1 oder 2, ferner umfassend Bestimmen des höchsten Gangübersetzungseinstellwerts basierend auf einer maximalen mechanischen Motordrehzahl.

4. Verfahren nach einem der Ansprüche 1 bis 3, ferner umfassend Beschleunigen des nichtelektrischen Motors auf eine Drehzahl, die der Erzeugung eines Soll-Leistungsniveaus entspricht.

5. Verfahren nach einem der Ansprüche 1 bis 4, ferner umfassend Bestimmen, ob sich das Fahrzeug im Schubbetriebsmodus befindet, durch Überwachen der Fahrpedal- und/oder der Bremsenbetätigung.

6. Verfahren nach einem der Ansprüche 1 bis 5, ferner umfassend Bestimmen, ob sich das Fahrzeug im Schubbetriebsmodus befindet, wenn das Fahrpedal freigegeben wird.

7. Verfahren nach einem der Ansprüche 1 bis 5, ferner umfassend Bestimmen, ob das Fahrzeug in den Schubbetriebsmodus eintritt, wenn die Bremse betätigt und das Fahrpedal freigegeben wird.

8. Verfahren nach einem der Ansprüche 1 bis 7, ferner umfassend Bestimmen einer Beendigung des Schubbetriebsmodus durch Überwachen der Bremsen-und/oder Fahrpedalbetätigung.

9. Verfahren nach einem der Ansprüche 1 bis 8, ferner umfassend nach Beendigung des Schubbetriebsmodus Beschleunigen des nichtelektrischen Motors mit einem Elektromotor des Fahrzeugs.

10. Verfahren nach einem der Ansprüche 1 bis 9, ferner umfassend nach Beendigung des Schubbetriebsmodus Beschleunigen des nichtelektrischen Motors durch Verstärken seiner Kraftstoffversorgung.

11. Verfahren nach einem der Ansprüche 1 bis 10, ferner umfassend nach Beendigung des Schubbetriebsmodus Beschleunigen des nichtelektrischen Motors mit kinetischer Energie des Fahrzeugs.

12. Verfahren nach einem der Ansprüche 1 bis 11, wobei die Rückgewinnungsvorrichtung Energie in einer Batterie und/oder einem Kondensator und/oder einem Speicher und/oder einem Druckbehälter und/oder einem Schwungrad speichert.

13. Verfahren nach einem der Ansprüche 1 bis 12, ferner umfassend Modifizieren des niedrigsten Gangübersetzungseinstellwerts zum Reduzieren der Drehzahl des nichtelektrischen Motors unter eine Drehzahl, die dazu ausreicht, ein gewünschtes Leistungsniveau bereitzustellen.

14. Verfahren nach einem der Ansprüche 1 bis 13, ferner umfassend Verwenden eines elektrischen Hybridantriebsmotors des Fahrzeugs als Generator zur Umwandlung von kinetischer Energie in elektrische Energie.

## Revendications

1. Procédé de gestion d'un véhicule ayant un moteur non électrique couplé sélectivement à une transmission et un dispositif de récupération sélectivement couplé à la transmission, comprenant des étapes consistant à :
déterminer les points de réglage du rapport de démultiplication le plus faible et le plus élevé sur le fondement respectif au moins en partie des limites de la vitesse de rotation du moteur non électrique la plus faible et la plus élevée,
déterminer si le véhicule est en mode de marche par inertie,
lorsque le véhicule est en mode de marche par inertie, modifier le point de réglage du rapport de démultiplication le plus faible (104) pour ralentir le moteur non électrique au-dessous de la vitesse de rotation du moteur non électrique la plus faible,
récupérer de l'énergie cinétique en ralentissant le véhicule, en utilisant un dispositif de récupération,
déterminer la fin du mode de marche par inertie du véhicule (112), et
rétablir le point de réglage du rapport de démultiplication le plus faible (114) et accélérer le moteur non électrique (116) jusqu'à au moins la limite de la vitesse de rotation du moteur non électrique la plus faible.

2. Procédé conforme à la revendication 1,
comprenant en outre une étape consistant à déterminer le point de réglage du rapport de démultiplication le plus faible sur le fondement de la réserve de puissance de traction souhaitée.

3. Procédé conforme à la revendication 1 ou 2,
comprenant en outre une étape consistant à déterminer le point de réglage du rapport de démultiplication le plus élevé sur le fondement de la vitesse maximum du moteur mécanique.

4. Procédé conforme à l'une des revendications 1 à 3,
comprenant en outre une étape consistant à accélérer le moteur non électrique jusqu'à une vitesse en accord avec la production du niveau de puissance souhaité.

5. Procédé conforme à l'une des revendications 1 à 4,
comprenant en outre une étape consistant à déterminer si le véhicule est en mode de marche par inertie en régulant l'actionnement de l'accélérateur et/ ou du frein.

6. Procédé conforme à l'une des revendications 1 à 5,
comprenant en outre une étape consistant à déterminer que le véhicule est en mode de marche par inertie lorsque l'accélération est relâché.

7. Procédé conforme à l'une des revendications 1 à 5,
comprenant en outre une étape consistant à déterminer que le véhicule rentre en mode de marche par inertie lorsque le frein est actionné et que l'accélérateur est relâché.

8. Procédé conforme à l'une des revendications 1 à 7,
comprenant en outre une étape consistant à déterminer la fin du mode de marche par inertie en régulant l'actionnement du frein et/ou de l'accélérateur.

9. Procédé conforme à l'une des revendications 1 à 8,
comprenant en outre une étape consistant, après la fin du mode de marche par inertie à accélérer le moteur non électrique avec le moteur électrique du véhicule.

10. Procédé conforme à l'une des revendications 1 à 9,
comprenant en outre une étape consistant, après la fin du mode de marche par inertie, à accélérer le moteur non électrique en augmentant son alimentation en carburant.

11. Procédé conforme à l'une des revendications 1 à 10,
comprenant en outre une étape consistant, après la fin du mode de marche par inertie, à accélérer le moteur non électrique avec l'énergie cinétique du véhicule.

12. Procédé conforme à l'une des revendications 1 à 11,
selon lequel le dispositif de récupération emmagasine de l'énergie dans une batterie et/ou un condensateur et/ou un accumulateur et/ou un réservoir sous pression et/ou une génératrice volante.

13. Dispositif conforme à l'une des revendications 1 à 12,
comprenant en outre une étape consistant à modifier le point de réglage du rapport de démultiplication le plus faible pour réduire la vitesse de rotation du moteur non électrique au-dessous de la vitesse suffisante pour fournir le niveau de puissance souhaité.

14. Procédé conforme à l'une des revendications 1 à 13,
comprenant en outre une étape consistant à utiliser le moteur d'entraînement hybride électrique du véhicule en tant que générateur pour convertir de l'énergie cinétique en énergie électrique.
